# EUROPÄISCHE PATENTANMELDUNG

(11) **EP 0 557 585 A2**
(43) Veröffentlichungstag der Anmeldung: **01.09.1993**
(21) Anmeldenummer: 92119766.1
(22) Anmeldetag: 20.11.1992
(51) Int. Cl.: B60R 16/02

(54) **Elektronisches System insbesondere für ein Kraftfahrzeug**

(30) Priorität: 28.02.1992 DE 4206228
(71) Anmelder: MERCEDES-BENZ AG, D-70327 Stuttgart (DE)
(72) Erfinder: Fischer, Jörg, Dipl.-Ing., W-7300 Esslingen (DE)

(57) **Zusammenfassung**

Die Erfindung bezieht sich auf eine Schaltungsanordnung (1) zur Auswahl einer von zwei Funktionen eines elektronischen Steuergerätes (2), insbesondere in einem Kraftfahrzeug. Aufgabe der Erfindung ist es, die Anzahl der Anschlüsse zu verringern. Erfindungsgemäß wird die Funktionsumschaltung durch ein Auswahlsignal bewirkt, welches aus der Polarität der angelegten Spannungsversorgung (U) gewonnen wird. Die Schaltungsanordnung (1) besteht aus einer Gleichrichterschaltung (3), deren Gleichspannungsausgänge mit den Spannungsversorgungseingängen (1.1,1.2) des elektronischen Steuergerätes (2) verbunden sind und einer Zusatzbeschaltung zur Polaritätsdiagnose (4), welche einen dritten Eingang (2.3) des Steuergerätes zur Funktionsauswahl ansteuert.

## Beschreibung

Die Erfindung betrifft ein elektronisches System gemäß dem Oberbegriff des Patentanspruches 1.

Insbesondere bei der Herstellung von Kraftfahrzeugen ist es aus Gründen der Lagerung, Logistik und Fertigungstechnik vorteilhaft elektronische Steuergeräte einzubauen, die im elektronischen Aufbau identisch sind, bei denen aber zwischen verschiedenen Funktionen ausgewählt werden kann. Erst nach der Montage am Band wird das Steuergerät durch ein einfaches Verfahren zur Funktionsauswahl an seine spezifische Anwendung und Systemvoraussetzungen, zum Beispiel Einsatzort und Fahrzeugtyp, angepaßt. In einfachster Weise erfolgt eine Funktionsauswahl während der Montage mittels Kodierschalter. Als nachteilig an diesem Verfahren wird erachtet, daß es größter Sorgfalt bedarf und daher den Herstellungsvorgang verzögert.

Bei einem gattungsgemäßen elektronischen System (DE 33 09 802 C2) ist ein Steuergerät mit einen Dateneingang zur Funktionsauswahl ausgestattet, der beispielsweise von einem ROM fahrzeugspezifische Daten erhält, mit denen das Steuergerät vor der ersten Inbetriebnahme individualisiert wird.

Für den einfachen Fall, daß bei dem Steuergerät nur zwei anwählbare Funktionen integriert sind, genügt einen Funktionsauswahleingang dergestalt vorzusehen, daß je nachdem ob eine Spannung anliegt oder nicht, die eine oder die andere Funktion des Steuergerätes eingeschaltet wird. Zur Spannungsversorgung und zur Funktionsauswahl des Steuergerätes sind daher insgesamt drei Anschlüsse erforderlich, die im Kraftfahrzeug mit einem Kabelbaum verbunden werden müßten.

Aufgabe der Erfindung ist es, ein gattungsgemäßes elektronisches System so weiterzubilden, daß für ein Steuergerät mit nur zwei integrierten Funktionen der Aufwand für die Anschlüsse und die Verkabelung verringert wird.

Diese Aufgabe wird bei einem gattungsgemäßen elektronischen System erfindungsgemäß mit den kennzeichnenden Merkmalen des Anspruchs 1 gelöst, wobei die Merkmale der Unteransprüche vorteilhafte Aus- und Weiterbildungen kennzeichnen.

Erfindungsgemäß ist vorgesehen, daß aus der Polarität der zugeführten Versorgungsspannung ein Auswahlsignal gewonnen wird, welches eine der beiden Funktionen des Steuergerätes einstellt. Dadurch kann die Zuführung des Auswahlsignals auf einem eigenen Signalweg im Kabelbaum und ein Anschlußpin entfallen, was Kosten einspart. Ein weiterer Vorteil der Erfindung gegenüber dem bekannten Stand der Technik besteht darin, daß auf sehr einfache Weise die Funktionsauswahl getroffen werden kann, indem lediglich die Anschlußleitungen zur Spannungsversorgung eines erfindungsgemäßen elektronischen Systems, dessen Steuergerät eine Funktion 1 realisieren soll, gegenüber einem solchen, dessen Steuergerät eine Funktion 2 realisieren soll, vertauscht werden. Wenn diese Vertauschung zwecks unterschiedlicher Kodierung bereits im Kabelbaum vorgesehen ist, so braucht bei der Montage nur darauf geachtet zu werden, daß alle Steuergeräte in gleicher Weise an den Kabelbaum angeschlossen werden.

Im folgenden wird ein Ausführungsbeispiel anhand der Zeichnungen im einzelnen erläutert. Es zeigen:
- **Fig.** 1:: das erfindungsgemäße elektronische System,
- **Fig.** 2:: eine Gleichrichterschaltung,
- **Fig.** 3a:: eine erste Schaltung zur Polaritätsdiagnose,
- **Fig.** 3b:: eine zweite Schaltung zur Polaritätsdiagnose.

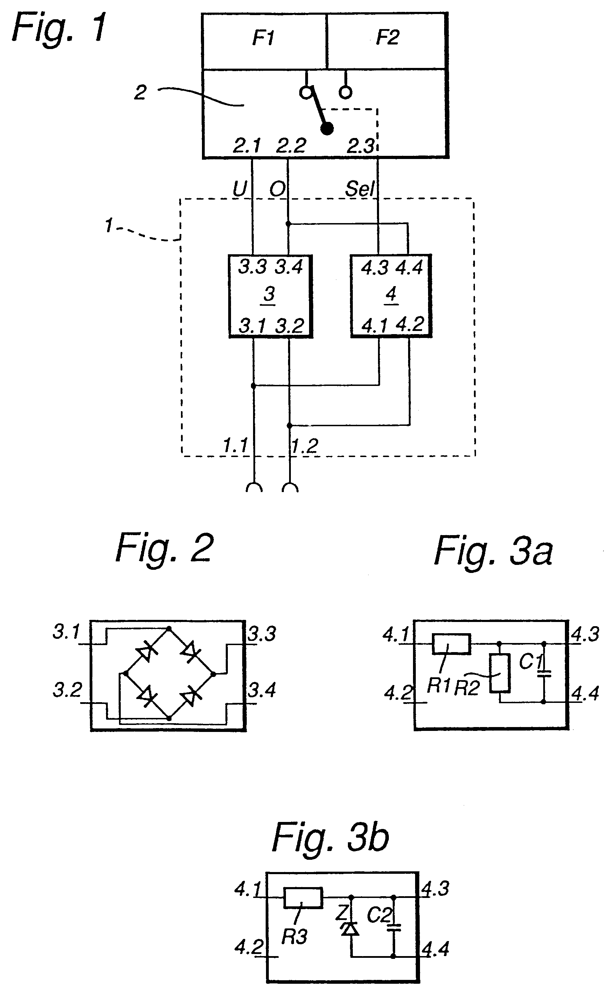

Der Schaltungsaufbau in **Fig.** 1 zeigt das erfindungsgemäße elektronische System mit der Schaltungsanordnung **1**, den beiden Spannungseingängen **1.1** und **1.2** sowie das Steuergerät **2** mit einem ersten Anschluß **2.1** zum Anlegen einer Versorgungsspannung U, einem zweiten Anschluß **2.2** für den Masseanschluß und einem dritten Funktionsauswahleingang **2.3** zum Einspeisen eines Auswahlsignals **Sel** zur Funktionsauswahl. Die Schaltlogik des Steuergerätes **2** ist durch die ersten beiden Spalten der folgenden Tabelle gegeben:

| **Sel** | Funktion | 1.1 | 1.2 |
|---|---|---|---|
| "1" | F2 | U | 0 |
| "0" | F1 | 0 | U |

Die Tabelle zeigt, welche Funktion im Steuergerät **2** eingeschaltet wird, abhängig davon ob am Funktionsauswahleingang **2.3** eine Spannung anliegt oder nicht, was einem Logikpegel "1" bzw. "0" des Auswahlsignals **Sel** entspricht.

Die erfindungsgemäße Schaltungsanordnung **1** besitzt die folgenden funktionellen Merkmale: Unabhängig von der Polarität einer über die Spannungseingänge **1.1** und **1.2** zugeführten Versorgungsspannung U, liegt an einem ersten Spannungsausgang die positive Spannung **U** und an einem zweiten die Masse **0** an, beide Spannungsausgänge sind mit den Spannungsversorgungseingängen **2.1** bzw. **2.2** des Steuergerätes **2** verbunden. Außerdem gibt ein dritter Spannungsausgang der Schaltungsanordnung ein dem Logikpegel "1" bzw. "0" entsprechendes Auswahlsignal **Sel** aus, je nach Polarität der an den Spannungseingängen **1.1** und **1.2** anliegenden Spannung, gemäß der obenstehenden Tabelle, wobei das Auswahlsignal **Sel** den Funktionsauswahleingang **2.3** des Steuergerätes **2** ansteuert.

In dem Ausführungsbeispiel setzt sich die Schaltungsanordnung **1** aus einer Gleichrichterschaltung **3** und einer Schaltung zur Polaritätsdiagnose **4** zusammen. Die Gleichrichterschaltung **3** bewirkt, daß unabhängig von der Polarität einer auf die Spannungseingängen **1.1** und **1.2** geführten Spannung U, am Gleichrichterausgang zwischen den Anschlüssen **3.3** und **3.4** die Spannung zur Versorgung des Steuergerätes **2** anliegt. In der einfachen Ausführung nach **Fig.** 2 ist der Gleichrichter aus vier Dioden in Brückenschaltung aufgebaut. Selbstverständlich kann die Gleichrichterschaltung **3** noch dahingehend weitergebildet werden, daß eine nachfolgende Stufe zur Spannungsregelung vorgesehen wird. Die Polaritätsdiagnoseschaltung **4** bewirkt, daß an dem Ausgang **4.3**, der mit dem Funktionsauswahleingang **2.3** des Steuergerätes **2** verbunden ist, ein dem Logikpegel "1" bzw. "0" entsprechendes Auswahlsignal **Sel** ausgegeben wird, je nach Polarität der an den Spannungseingängen **1.1** und **1.2** anliegenden Spannung gemäß der obenstehenden Tabelle. Es sind verschiedene Ausführungen für die Polaritätsdiagnoseschaltung **4** denkbar. **Fig.** 3a zeigt ein Ausführung mittels einer Spannungsteilerschaltung und **Fig.** 3b mittels einer Spannungsbegrenzerschaltung. Die Dimensionierung der Widerstände **R1**, **R2**, **R3** der Kondensatoren **C1**, **C2** und der Zenerdiode **Z** ist dem zur sicheren Umschaltung erforderlichen Spannungspegel am Funktionsauswahleingang **2.3** anzupassen und kann vom Fachmann ohne Schwierigkeit ausgeführt werden.

## Patentansprüche

1. Elektronisches System, insbesondere für ein Kraftfahrzeug, bestehend aus einem elektronischen Steuergerät mit zwei Spannungsversorgungseingängen und einem Funktionsauswahleingang zur Auswahl von verschiedenen Funktionen des Steuergerätes sowie einer Schaltungsanordnung zur Ansteuerung des Funktionsauswahleingangs, **dadurch gekennzeichnet**, daß die Schaltungsanordnung (**1**) nur zwei Spannungseingänge (**1.1, 1.2**) aber drei Spannungsausgänge aufweist, wobei die beiden ersten Spannungsausgänge der Schaltungsanordnung (**1**) jeweils mit den Spannungsversorgungseingängen (**2.1, 2.2**) des Steuergerätes (**2**) und der dritte Spannungsausgang der Schaltungsanordnung (**1**) mit dem Funktionsauswahleingang (**2.3**) des Steuergerätes (**2**) verbunden sind, und die Schaltungsanordnung (**1**) die funktionellen Merkmale aufweist, daß unabhängig von der Polarität einer auf die Spannungseingange (**1.1, 1.2**) der Schaltungsanordnung (**1**) gelegten Versorgungspannung an den ersten beiden Spannungsausgängen die Spannung (**U**) zur Versorgung des Steuergerätes und die Masse (**0**) anliegt und an dem dritten Spannungsausgang, je nach Polarität der auf die beiden Spannungseingänge (**1.1, 1.2**) der Schaltungsanordnung (**1**) gelegten Versorgungsspannung, ein Auswahlsignal (**Sel**) zur Ansteuerung des Funktionsauswahleingangs (**2.3**) des Steuergerätes (**2**) ausgegeben wird, welches die eine oder die andere von zwei Funktion des Steuergerätes (**2**) einschaltet.

2. Elektronisches System nach Anspruch 1, **dadurch gekennzeichnet**, daß die Schaltungsanordnung (**1**) aus einer Gleichrichter- (**3**) und einer Polaritätsdiagnoseschaltung (**4**) aufgebaut ist, welche eingangsseitig mit den beiden Spannungseingängen (**1.1, 1.2**) der Schaltungsanordnung (**1**) verbunden sind, wobei die Ausgänge (**3.3, 3.4**) der Gleichrichterschaltung (**3**) mit den beiden Spannungsversorgungseingängen (**2.1, 2.2**) des elektronischen Steuergerätes (**2**) und ein Ausgang (**4.3**) der Polaritätsdiagnoseschaltung (**4**) mit dem Funktionsauswahleingang (**2.3**) zur Auswahl einer von zwei Funktionen des Steuergerätes (**2**) verbunden sind.

3. Elektronisches System nach Anspruch 2, **dadurch gekennzeichnet**, daß die Gleichrichterschaltung (**3**) als Graetz-Gleichrichter mit vier Dioden in Brückenschaltung aufgebaut ist, wobei die Eingänge der Gleichrichterschaltung (**3.1** und **3.2**) den Wechselstromeingängen des Graetz-Gleichrichters und die Ausgänge der Gleichrichterschaltung (**3.3** und **3.4**) den Gleichstromausgängen des Graetz-Gleichrichters entsprechen.

4. Elektronisches System nach Anspruch 2, **dadurch gekennzeichnet**, daß die Polaritätsdiagnoseschaltung (**4**) mittels zweier Widerstände (**R1** und **R2**) sowie einem Kondensator (**C1**) zur Glättung, der dem einem Widerstand (**R2**) parallel geschaltet ist, als Spannungsteiler aufgebaut ist.

5. Elektronisches System nach Anspruch 2, **dadurch gekennzeichnet**, daß die Polaritätsdiagnoseschaltung (**4**) mittels eines Widerstandes (**R3**) und einer Zener-Diode (**Z**) sowie einem Kondensator (**C2**) zur Glättung, welcher der Zener-Diode parallel geschaltet ist, als Spannungsbegrenzer aufgebaut ist.

6. Elektronisches System nach Anspruch 1, **dadurch gekennzeichnet**, daß die Schaltungsanordnung (**1**) und das Steuergerät (**2**) in einem gemeinsamen Gehäuse eingebaut sind.
